# EUROPEAN PATENT APPLICATION

(11) **EP 4 454 759 A1**
(43) Date of publication of application: **30.10.2024**
(21) Application number: 22910565.5
(22) Date of filing: 25.10.2022
(51) Int. Cl.: B03B 5/36, G01N 1/04

(54) **PURIFICATION APPARATUS**

(30) Priority: 24.12.2021 JP 2021211273
(71) Applicant: SHIMADZU CORPORATION, Kyoto-shi, Kyoto 604-8511 (JP)
(72) Inventor: IKEZAWA, Yoshio, Kyoto-shi, Kyoto 604-8511 (JP); ITABASHI, Toshihisa, Kyoto-shi, Kyoto 604-8511 (JP); KAWAHARA, Kazumi, Kyoto-shi, Kyoto 604-8511 (JP); TERADA, Masaaki, Kyoto-shi, Kyoto 604-8511 (JP)
(74) Representative: Kilian Kilian & Partner mbB
(86) International application number: PCT/JP2022/039625
(87) International publication number: WO 2023/119844

(57) **Abstract**

A technique to suppress retention of a mixed sample on a filter in purification of a sample is provided. A purification apparatus (1) that purifies a specific sample from a mixed sample includes a container (50) to separate the mixed sample with a heavy solution based on a specific gravity difference, a filter unit (90) that collects the specific sample in the mixed sample by introduction of a supernatant discharged from the container (50), the specific sample being lighter in specific gravity than the heavy solution, and a discharge pipe (80) that guides the supernatant discharged from the container to the filter unit (90). The filter unit (90) includes a filter (210) and a connection portion (26), the connection portion (26) being attached to the filter (210) and a discharge path (80) and connecting the filter (210) and the discharge path (80) to each other.

## Description

### TECHNICAL FIELD

The present disclosure relates to a purification apparatus that purifies a sample.

### BACKGROUND ART

In order to collect a target substance to be collected, the target substance has conventionally been purified from a mixed sample containing the target substance.

For example, NPL 1 and NPL 2 disclose a method of purifying and collecting microplastic from a mixed sample collected from the sea.

### CITATION LIST

### NON PATENT LITERATURE

NPL 1: "GUIDELINES FOR THE MONITORING AND ASSESSMENT OF PLASTIC LITTER IN THE OCEAN," GESAMP Reports and Studies No. 99, National Oceanic and Atmospheric Administration (NOAA), [Searched on December 15, 2021], the Internet <URL: https://environmentlive.unep.org/media/docs/marine_plastics/une_science_dvision_ges amp_reports.pdf>

NPL 2: "Guidelines for Harmonizing Ocean Surface Micro plastic Monitoring Methods," Version 1.0, [online], May 2019, Ministry of the Environment, [Searched on December 15, 2021], the Internet <URL: http://www.env.go.jp/en/water/marine_litter/guidelines/guidelines.pdf>

### SUMMARY OF INVENTION

### TECHNICAL PROBLEM

In the purification method disclosed in NPL 1 and NPL 2, a filter is used for collection of microplastic. A mesh size of the filter should be smaller than a size of microplastic to be collected. The mesh size of the filter used in the purification method in NPL 2 is, for example, 5 mm.

When the mesh size of the filter is small, a filtration resistance tends to increase in filtration of the mixed sample by the filter. With increase in filtration resistance of the filter, the mixed sample which is not filtered may be retained on the filter.

The present disclosure was made to solve such a problem, and an object thereof is to provide a technique to suppress retention of a mixed sample on a filter.

### SOLUTION TO PROBLEM

A purification apparatus according to one aspect of the present disclosure is a purification apparatus that purifies a specific sample from a mixed sample. The purification apparatus includes a container to separate the mixed sample with a heavy solution based on a specific gravity difference, a filter unit that collects the specific sample in the mixed sample by introduction of a supernatant discharged from the container, the specific sample being lighter in specific gravity than the heavy solution, and a discharge path that guides the supernatant discharged from the container to the filter unit. The filter unit includes a filter and a connection portion, the connection portion being attached to the filter and the discharge path and connecting the filter and the discharge path to each other.

### ADVANTAGEOUS EFFECTS OF INVENTION

According to the present disclosure, the connection portion that connects the filter and the discharge path to each other surrounds a space between the filter and the discharge path. Therefore, even when the filter is clogged due to a filtration resistance, air surrounded by the connection portion produces force to push the mixed sample retained on the filter and hence retention of the mixed sample on the filter can be suppressed.

### BRIEF DESCRIPTION OF DRAWINGS

Fig. 1 is a diagram schematically showing a purification apparatus according to the present embodiment.
Fig. 2 is a diagram showing a construction of a purification instrument according to the present embodiment.
Fig. 3 is a diagram for illustrating a hardware configuration of the purification apparatus according to the present embodiment.
Fig. 4 is a flowchart of purification processing performed by the purification apparatus according to the present embodiment.
Fig. 5 is a diagram showing a connection portion that connects a filter and a discharge pipe to each other according to the present embodiment.
Fig. 6 is a diagram showing a state in which a mixed sample flows from the discharge pipe into the filter.
Fig. 7 is a diagram showing a connection portion that connects the filter and the discharge pipe to each other in a first modification.
Fig. 8 is a diagram showing a connection portion that connects the filter and the discharge pipe to each other in a second modification.

### DESCRIPTION OF EMBODIMENTS

The present embodiment will be described in detail with reference to the drawings. The same or corresponding elements in the drawings have the same reference characters allotted and description thereof will not be repeated in principle.

### [Main Configuration of Purification Apparatus]

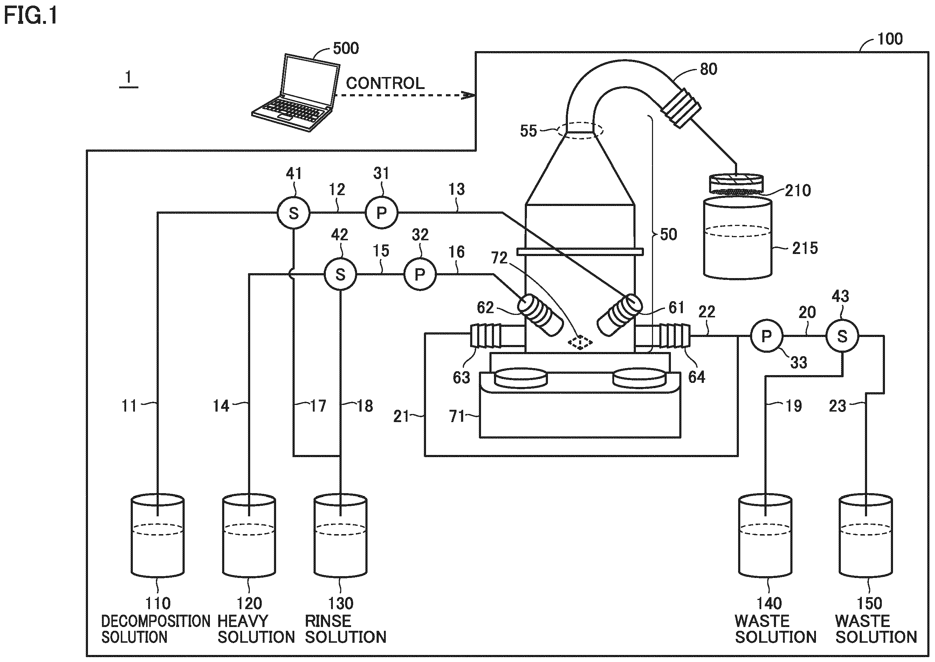

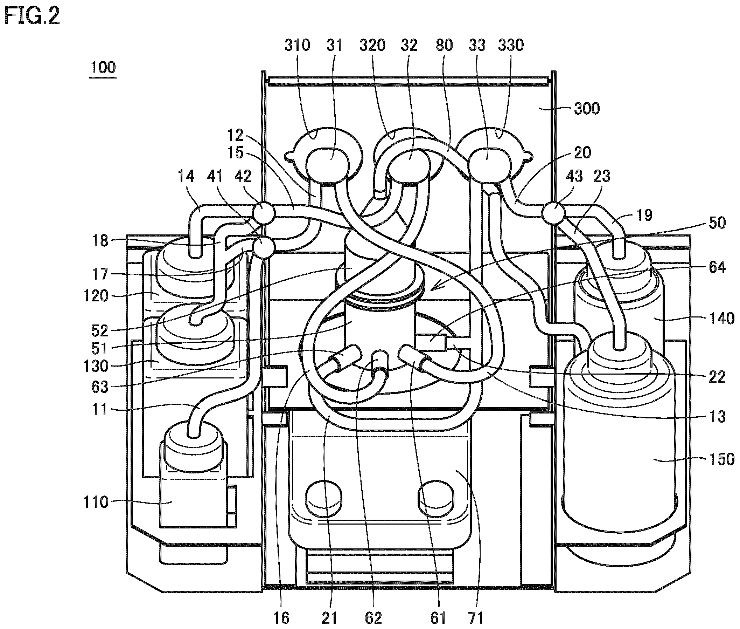

A main configuration of a purification apparatus 1 and a purification instrument 100 according to the present embodiment will be described with reference to Figs. 1 and 2. Fig. 1 is a diagram schematically showing purification apparatus 1 according to the present embodiment. Fig. 2 is a diagram showing a construction of purification instrument 100 according to the present embodiment.

As shown in Fig. 1, purification apparatus 1 includes purification instrument 100 that purifies a target substance from a mixed sample and a control device 500. Control device 500 controls purification instrument 100. In purification apparatus 1 according to the present embodiment, control device 500 controls purification instrument 100 to purify and collect the target substance from the mixed sample. "Purification" encompasses taking a pure substance (target substance) out of a mixture.

Anything containing a target substance to be collected may be applicable as a "mixed sample" to be purified by purification apparatus 1. Exemplary "mixed samples" include seawater and sand collected from the sea or the seashore and processed products such as food and cosmetics. In the present embodiment, seawater and sand collected from the sea or the seashore represent an exemplary "mixed sample."

Any substance to be collected by purification apparatus 1 may be applicable as the target substance to be collected by purification apparatus 1. Exemplary target substances include microplastic which is fine plastic particles having a size not larger than 5 mm. In the present embodiment, microplastic contained in seawater and sand collected from the sea or the seashore represents an exemplary target substance. Microplastic which is the target substance is an exemplary "specific sample" in the present disclosure.

As shown in Figs. 1 and 2, purification instrument 100 includes a container 50 where a mixed sample is accommodated, pipes 11 to 23, pumps 31 to 33, electromagnetic valves 41 to 43, ports 61 to 64, a stirrer 71, a stirring bar 72, a discharge pipe 80, a decomposition solution reservoir 110, a heavy solution reservoir 120, a rinse solution reservoir 130, waste solution reservoirs 140 and 150, a filter 210, a supernatant reservoir 215, and a casing 300.

Container 50 includes a first member 51 and a second member 52 located above first member 51. Container 50 is dividable into first member 51 and second member 52. A user can put a mixed sample in the inside of first member 51 by removing second member 52 from first member 51. First member 51 and second member 52 are fixed in a connected state with the use of a fixing tool (not shown) or the like. The mixed sample is thus accommodated in container 50. In container 50 according to the present embodiment, first member 51 is formed in a shape of a column with a circular bottom surface. The bottom surface of first member 51 is not limited to the circular surface but may be in another shape such as a polygonal shape or an oval shape. Container 50 in the present embodiment is formed of glass.

Pipe 11 connects decomposition solution reservoir 110 and electromagnetic valve 41 to each other. Pipe 12 connects electromagnetic valve 41 and pump 31 to each other. Pipe 13 connects pump 31 and port 61 to each other. Port 61 is provided in an outer circumferential portion of container 50. Decomposition solution reservoir 110 and port 61 of container 50 are thus connected to each other through pipes 11, 12, and 13 with electromagnetic valve 41 and pump 31 being interposed.

Pipe 14 connects heavy solution reservoir 120 and electromagnetic valve 42 to each other. Pipe 15 connects electromagnetic valve 42 and pump 32 to each other. Pipe 16 connects pump 32 and port 62 to each other. Port 62 is provided in the outer circumferential portion of container 50. Heavy solution reservoir 120 and port 62 of container 50 are thus connected to each other through pipes 14, 15, and 16 with electromagnetic valve 42 and pump 32 being interposed.

Pipe 17 connects rinse solution reservoir 130 and electromagnetic valve 41 to each other. In other words, while electromagnetic valve 41 is connected to decomposition solution reservoir 110 through pipe 11, it is connected also to rinse solution reservoir 130 through pipe 17. Rinse solution reservoir 130 and port 61 of container 50 are thus connected to each other through pipes 17, 12, and 13 with electromagnetic valve 41 and pump 31 being interposed.

Pipe 18 connects rinse solution reservoir 130 and electromagnetic valve 42 to each other. In other words, while electromagnetic valve 42 is connected to heavy solution reservoir 120 through pipe 14, it is connected also to rinse solution reservoir 130 through pipe 18. Rinse solution reservoir 130 and port 62 of container 50 are thus connected to each other through pipes 18, 15, and 16 with electromagnetic valve 42 and pump 32 being interposed.

Pipe 19 connects waste solution reservoir 140 and electromagnetic valve 43 to each other. Pipe 20 connects electromagnetic valve 43 and pump 33 to each other. Pipe 21 connects pump 33 and port 63 to each other. Port 63 is provided in the outer circumferential portion of container 50. Waste solution reservoir 140 and port 63 of container 50 are thus connected to each other through pipes 19, 20, and 21 with electromagnetic valve 43 and pump 33 being interposed.

Pipe 22 connects pump 33 and port 64 to each other. Port 64 is provided in the outer circumferential portion of container 50. In other words, while pump 33 is connected to port 63 of container 50 through pipe 21, it is connected also to port 64 of container 50 through pipe 22. Waste solution reservoir 140 and port 64 of container 50 are thus connected to each other through pipes 19, 20, and 22 with electromagnetic valve 43 and pump 33 being interposed.

Pipe 23 connects waste solution reservoir 150 and electromagnetic valve 43 to each other. In other words, while electromagnetic valve 43 is connected to waste solution reservoir 140 through pipe 19, it is connected also to waste solution reservoir 150 through pipe 23. Waste solution reservoir 150 and port 63 of container 50 are thus connected to each other through pipes 23, 20, and 21 with electromagnetic valve 43 and pump 33 being interposed. Waste solution reservoir 150 and port 64 of container 50 are connected to each other through pipes 23, 20, and 22 with electromagnetic valve 43 and pump 33 being interposed.

A decomposition solution for treatment of a contaminant is stored in decomposition solution reservoir 110. The "contaminant" refers to a foreign matter in the mixed sample, other than a target substance to be collected. In the present embodiment, an exemplary "contaminant" includes an organic contaminant having a property of an organic substance. Any "decomposition solution" may be applicable so long as the contaminant is decomposed therewith. In the present embodiment, the "decomposition solution" decomposes an organic contaminant. An exemplary "decomposition solution" includes an oxidizing agent such as oxygenated water (H₂O₂) and a mixture of oxygenated water (H₂O₂) and iron (II) oxide (FeO). When seawater and sand are adopted as the "mixed sample," exemplary "organic contaminants" include a scrap piece of wood mixed in seawater or sand and planktons.

A heavy solution for separation of a mixed sample based on a specific gravity difference is stored in heavy solution reservoir 120. Any heavy solution may be applicable so long as the "heavy solution" separates the mixed sample based on the specific gravity difference. In the present embodiment, the "heavy solution" allows an inorganic contaminant having a property of an inorganic substance to settle based on the specific gravity difference. Exemplary "heavy solutions" include sodium chloride (NaCl), sodium iodide (NaI), and zinc chloride (ZnCh). When seawater and sand are adopted as the "mixed sample," exemplary "inorganic contaminants" include sand, glass, and stone. A specific gravity of the "heavy solution" is set to be greater than a specific gravity of the "target substance" to be collected by purification apparatus 1 and to be smaller than a specific gravity of the "inorganic contaminant." For example, when microplastic is adopted as the target substance to be collected by purification apparatus 1 and sand, glass, stone, and the like are adopted as the "inorganic contaminant," the "heavy solution" should only be greater in specific gravity than microplastic and should only be smaller in specific gravity than sand, glass, stone, and the like. Specifically, the specific gravity of the "heavy solution" should only be set approximately to 1.5 to 1.7.

A rinse solution for cleaning of the inside of container 50 is stored in rinse solution reservoir 130. Any rinse solution may be applicable so long as the inside of container 50 is cleaned with the "rinse solution." An exemplary "rinse solution" includes water. The "rinse solution" plays a role to clean the inside of container 50 and a role to dilute the decomposition solution introduced into container 50.

A waste solution discharged from container 50 such as the heavy solution, the rinse solution, and sea water contained in the mixed sample is stored in waste solution reservoirs 140 and 150.

Pump 31 introduces the decomposition solution suctioned from decomposition solution reservoir 110 or the rinse solution suctioned from rinse solution reservoir 130 into container 50 through port 61 under the control by control device 500.

Pump 32 introduces the heavy solution suctioned from heavy solution reservoir 120 or the rinse solution suctioned from rinse solution reservoir 130 into container 50 through port 62 under the control by control device 500.

Pump 33 discharges the waste solution suctioned from container 50 through port 63 or port 64 to waste solution reservoir 140 or waste solution reservoir 150 under the control by control device 500.

Electromagnetic valve 41 switches a path to be connected to port 61 between a path between decomposition solution reservoir 110 and port 61 of container 50 (a path through pipes 11, 12, and 13) and a path between rinse solution reservoir 130 and port 61 of container 50 (a path through pipes 17, 12, and 13) under the control by control device 500.

Electromagnetic valve 42 switches a path to be connected to port 62 between a path between heavy solution reservoir 120 and port 62 of container 50 (a path through pipes 14, 15, and 16) and a path between rinse solution reservoir 130 and port 62 of container 50 (a path through pipes 18, 15, and 16) under the control by control device 500.

Electromagnetic valve 43 switches a path to be connected to ports 63 and 64 between a path between waste solution reservoir 140 and ports 63 and 64 of container 50 (a path through pipes 19, 20, and 21 or a path through pipes 19, 20, and 22) and a path between waste solution reservoir 150 and ports 63 and 64 of container 50 (a path through pipes 23, 20, and 21 or a path through pipes 23, 20, and 22) under the control by control device 500.

The decomposition solution in decomposition solution reservoir 110 or the rinse solution in rinse solution reservoir 130 suctioned by pump 31 is introduced into container 50 through port 61. The heavy solution in heavy solution reservoir 120 or the rinse solution in rinse solution reservoir 130 suctioned by pump 32 is introduced into container 50 through port 61. The waste solution in container 50 suctioned by pump 33 is discharged to waste solution reservoir 140 or waste solution reservoir 150 through ports 63 and 64.

In the inside of each of ports 61 to 64, a filter (not shown) is provided not to allow discharge from container 50, of a target substance contained in the mixed sample. The filter is a mesh having a mesh size small enough to trap microplastic to be collected. The filter (mesh) is, for example, a wire gauze made of steel use stainless (SUS) or a membrane filter made of polytetrafluoroethylene (PTFE) (Teflon^{™}). When microplastic is to be collected, the mesh size of the filter (mesh) should be small enough not to allow passage therethrough of a particle having a size of 0.1 to 5.0 mm, and the mesh size is preferably approximately 0.1 mm.

Stirrer 71 is, for example, a magnetic constant-temperature stirrer, and arranged below container 50. Stirrer 71 generates magnetic force under the control by control device 500 to rotate stirring bar 72 provided in container 50. Stirring bar 72 stirs the mixed sample in container 50 by rotation or vibration upon receiving magnetic force from stirrer 71.

Furthermore, stirrer 71 keeps a temperature of the mixed sample in container 50 constant by heating container 50 from below container 50 under the control by control device 500. A temperature of stirrer 71 is set approximately to 60°C to 70°C, and fluid in container 50 heated by stirrer 71 in accordance with a setting temperature is kept at approximately 50°C.

Discharge pipe 80 is connected to a discharge port 55 provided at an uppermost portion of container 50, and a supernatant of the mixed sample that flows over container 50 is discharged therethrough to the outside. Discharge pipe 80 is an exemplary "discharge path" in the present disclosure.

Filter 210 collects the target substance to be collected that is contained in the supernatant of the mixed sample discharged through discharge pipe 80 by filtering the supernatant. The supernatant that has passed through filter 210 is collected in supernatant reservoir 215. Filter 210 is a mesh having a mesh size small enough to trap microplastic to be collected. Filter 210 (mesh) is, for example, a wire gauze made of SUS or a membrane filter made of PTFE. When microplastic is to be collected, the mesh size (mesh) of filter 210 should be small enough not to allow passage therethrough of a particle having a size of 0.1 to 5.0 mm, and the mesh size is preferably approximately 0.1 mm.

Container 50 and stirrer 71 are accommodated in casing 300. Casing 300 is provided with openings 310, 320, and 330 for arrangement of respective pumps 31, 32, and 33.

Control device 500 may be implemented by a general-purpose computer or a dedicated computer for controlling purification instrument 100. Control device 500 controls pumps 31 to 33, electromagnetic valves 41 to 43, and stirrer 71 in purification instrument 100.

Specifically, control device 500 has electric power supplied to pumps 31 to 33 to drive a motor (not shown) to open or close a valve (not shown). Pumps 31 to 33 thus suction or deliver various types of fluid.

Control device 500 has electric power supplied to electromagnetic valves 41 to 43 to open or close a valve (not shown). Electromagnetic valves 41 to 43 thus switch a path through which various types of fluid pass.

Control device 500 has electric power supplied to stirrer 71 to drive a motor (not shown) such that stirring bar 72 in container 50 is rotated with magnetic force. Furthermore, control device 500 has electric power supplied to stirrer 71 to drive a heater (not shown) to apply certain heat to container 50.

### [Hardware Configuration of Purification Apparatus]

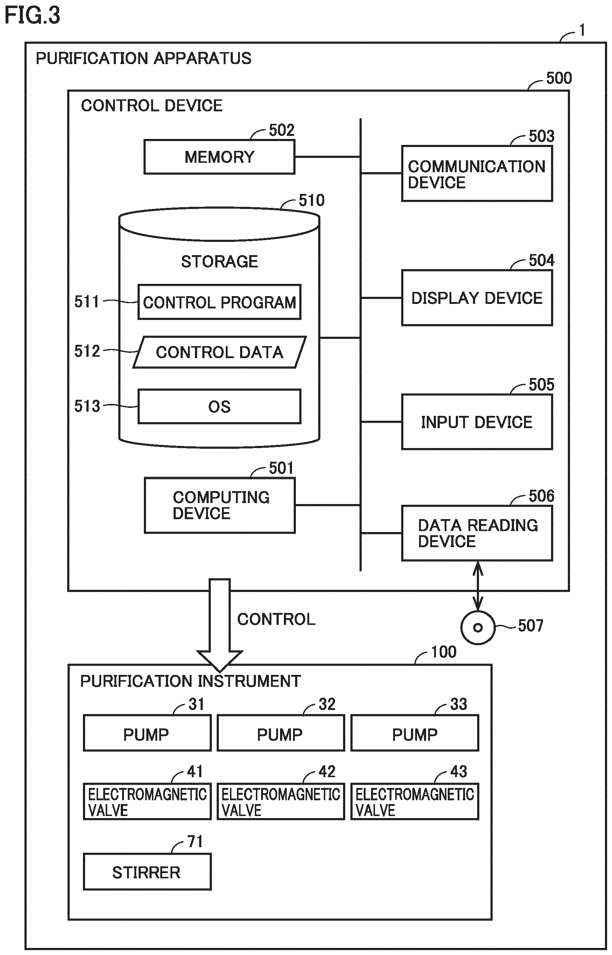

A hardware configuration of purification apparatus 1 according to the present embodiment will be described with reference to Fig. 3. Fig. 3 is a diagram for illustrating a hardware configuration of purification apparatus 1 according to the present embodiment. As shown in Fig. 3, control device 500 includes, as main hardware elements thereof, a computing device 501, a memory 502, a communication device 503, a display device 504, an input device 505, a data reading device 506, and a storage 510.

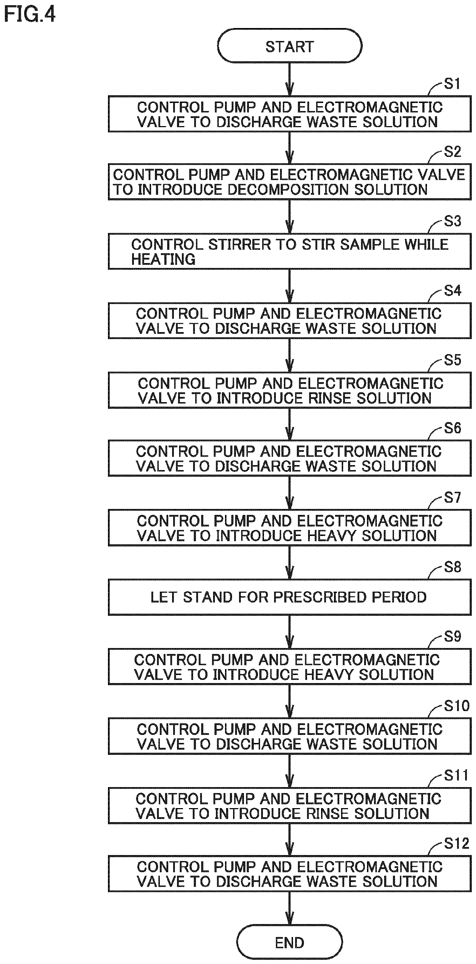

Computing device 501 is a computer that reads a program (for example, a control program 511 and an operating system (OS) 513) stored in storage 510 and develops the read program on memory 502 to execute the same. For example, computing device 501 performs purification processing (which will be described later with reference to Fig. 4) for controlling purification instrument 100 by executing control program 511. Computing device 501 is implemented, for example, by a central processing unit (CPU), a field programmable gate array (FPGA), a graphics processing unit (GPU), a multi processing unit (MPU), or the like. Computing device 501 may be implemented by processing circuitry.

Memory 502 provides a storage area where a program code or a work memory is temporarily stored in execution of any program by computing device 501. Memory 502 is implemented by a volatile memory such as a dynamic random access memory (DRAM) or a static random access memory (SRAM) or a non-volatile memory such as a read only memory (ROM) or a flash memory.

Communication device 503 transmits and receives data to and from another device over a network (not shown). Communication device 503 is in conformity with any communication scheme such as Ethernet^{®}, wireless local area network (LAN), and Bluetooth^{®}.

Display device 504 is implemented, for example, by a liquid crystal display (LCD), and shows a program design screen or an alert screen on the occurrence of an abnormal condition.

Input device 505 is implemented, for example, by a keyboard, a mouse, or the like, and used for input of design information by a user in design of a program. Input device 505 may include a start switch for starting purification processing by computing device 501.

Data reading device 506 reads data stored in a storage medium 507. Another feature such as a compact disc (CD), a digital versatile disc (DVD), or a universal serial bus (USB) memory may be applicable as storage medium 507 so long as various types of data can be stored therein.

Storage 510 provides a storage area where various types of data required for purification processing or the like are stored. Storage 510 is implemented, for example, by a non-volatile memory device such as a hard disk drive (HDD) or a solid state drive (SSD). Control program 511, control data 512, and an operating system (OS) 513 are stored in storage 510.

Control program 511 is a program in which contents of purification processing are described, and executed by computing device 501. Control program 511 may be designed by a user with the use of input device 505, read from storage medium 507 by data reading device 506, or obtained through the network from another device such as a server by communication device 503.

Control data 512 is data used in execution of control program 511 by computing device 501. For example, control data 512 includes data such as a setting value for control of each of pumps 31 to 33, electromagnetic valves 41 to 43, and stirrer 71. Control data 512 may be inputted by a user with the use of input device 505, read from storage medium 507 by data reading device 506, or obtained through the network from another device such as a server by communication device 503.

OS 513 provides a basic function for computing device 501 to perform various types of processing.

### [Mixed Sample Purification Processing]

Mixed sample purification processing performed by purification apparatus 1 will now be described with reference to Fig. 4. Fig. 4 is a flowchart of purification processing performed by purification apparatus 1 according to the present embodiment. Each step shown in Fig. 4 is performed by execution of OS 513 and control program 511 by computing device 501 of control device 500. "S" in the drawings is used as abbreviation of "STEP".

For preparation, a user introduces a mixed sample into container 50 of purification apparatus 1. For example, the user removes the first member from the second member to open container 50 to introduce the mixed sample into container 50. Thereafter, the user performs a start operation with the use of input device 505 of control device 500 to start control of purification instrument 100 by control device 500.

When control device 500 starts control of purification instrument 100, as shown in Fig. 4, control device 500 controls pump 33 and electromagnetic valve 43 to discharge the waste solution in container 50 to waste solution reservoir 150 through pipes 20 to 23 and ports 63 and 64 (S 1). Microplastic or the like to be collected that is contained in the mixed sample remains in container 50 without being discharged to the outside, owing to the filter provided in the inside of ports 63 and 64.

Control device 500 then deactivates pump 33 on a discharge side and controls pump 31 and electromagnetic valve 41 to introduce the decomposition solution in decomposition solution reservoir 110 into container 50 through pipes 11 to 13 and port 61 (S2).

Control device 500 then controls stirrer 71 to rotate stirring bar 72 provided in container 50 to stir the mixed sample while certain heat is applied to container 50 (S3). A temperature of container 50 and a rotation speed and a rotation time period of stirring bar 72 are set in advance by the user. As the mixed sample is thus stirred, oxidation treatment with an oxidizing agent is performed and an organic contaminant contained in the mixed sample is decomposed. Though heating is not necessarily required during stirring of the mixed sample, decomposition by oxidation treatment tends to be accelerated by the temperature of the mixed sample maintained constant by heating.

Control device 500 then controls pump 33 and electromagnetic valve 43 to discharge the waste solution in container 50 included in the mixed sample in which the organic contaminant has been decomposed to waste solution reservoir 150 through pipes 20 to 23 and ports 63 and 64 (S4). Microplastic or the like to be collected that is contained in the mixed sample remains in container 50 without being discharged to the outside, owing to the filter provided in the inside of ports 63 and 64.

Control device 500 then deactivates pump 33 on the discharge side and controls pump 31 and electromagnetic valve 41 to introduce the rinse solution in rinse solution reservoir 130 into container 50 through pipes 17, 12, and 13 and port 61 to clean the inside of container 50 (S5). At this time, control device 500 controls an amount of suction by pump 31 to introduce the rinse solution in an amount set in advance by the user into container 50.

Control device 500 then controls pump 33 and electromagnetic valve 43 to discharge the waste solution in container 50 into which the rinse solution has been introduced to waste solution reservoir 150 through pipes 20 to 23 and ports 63 and 64 (S6). The inside of container 50 is thus cleaned with the rinse solution. Microplastic or the like to be collected that is contained in the mixed sample remains in container 50 without being discharged to the outside, owing to the filter provided in the inside of ports 63 and 64. Thereafter, control device 500 may let the mixed sample stand as it is for a prescribed period (for example, for one day) to dry the mixed sample.

Control device 500 then controls pump 32 and electromagnetic valve 42 to introduce the heavy solution in heavy solution reservoir 120 into container 50 through pipes 14 to 16 and port 62 (S7). At this time, control device 500 controls the amount of suction by pump 32 to introduce the heavy solution in an amount set in advance by the user into container 50.

Thereafter, control device 500 lets the mixed sample stand as it is for a prescribed period (for example, for one day) (S8). As the heavy solution is thus introduced into the mixed sample in container 50 and let stand, an inorganic contaminant contained in the mixed sample settles around the bottom of container 50 owing to the specific gravity difference.

Control device 500 then again controls pump 32 and electromagnetic valve 42 to again introduce the heavy solution in heavy solution reservoir 120 into container 50 through pipes 14 to 16 and port 62 (S9). At this time, control device 500 controls the amount of suction by pump 32 to introduce the heavy solution in the amount set in advance by the user into container 50. As the heavy solution is thus introduced again into the mixed sample in container 50, a fluid level of the mixed sample separated based on the specific gravity gradually rises in container 50 and the supernatant of the mixed sample soon reaches discharge port 55 of container 50. Then, the supernatant of the mixed sample is discharged to the outside through discharge port 55 and discharge pipe 80.

The supernatant of the mixed sample discharged through discharge pipe 80 is filtered by filter 210, and only the waste solution is collected in supernatant reservoir 215. Microplastic which is the target substance lighter in specific gravity than the heavy solution remains at filter 210.

After microplastic is collected as a result of purification of the mixed sample, control device 500 has container 50 cleaned as post-treatment. Specifically, control device 500 controls pump 33 and electromagnetic valve 43 to discharge the waste solution in container 50 from which microplastic has been collected to waste solution reservoir 140 through pipes 19 to 22 and ports 63 and 64 (S10).

Control device 500 then deactivates pump 33 on the discharge side and controls pump 32 and electromagnetic valve 42 to introduce the rinse solution in rinse solution reservoir 130 into container 50 through pipes 18, 15, and 16 and port 62 to clean the inside of container 50 (S11). At this time, control device 500 controls the amount of suction by pump 32 to introduce the rinse solution in the amount set in advance by the user into container 50.

Control device 500 then controls pump 33 and electromagnetic valve 43 to discharge the waste solution in container 50 into which the rinse solution has been introduced to waste solution reservoir 140 through pipes 19 to 22 and ports 63 and 64 (S12). The inside of container 50 is thus cleaned with the rinse solution.

As set forth above, according to purification apparatus 1 according to the present embodiment, control device 500 automatically has the decomposition solution and the heavy solution introduced into the mixed sample accommodated in container 50 at appropriate timing for an appropriate time period, or has the waste solution discharged from container 50. Therefore, the user himself/herself does not have to introduce the decomposition solution and the heavy solution into container 50 or to discharge the waste solution from container 50. Thus, time and efforts by the user are not required, there is no possibility of variation in accuracy in collection of microplastic depending on skills of the user, and the user can accurately purify the mixed sample without spending time and efforts.

Furthermore, according to purification apparatus 1 according to the present embodiment, after microplastic is collected, control device 500 has used container 50 automatically cleaned. Therefore, the user himself/herself does not have to clean container 50.

### [As to Filtration Resistance Produced in Filter]

As described above, filter 210 in the present embodiment has a mesh size, for example, of approximately 0.1 mm. The mesh size of filter 210 may be, for example, smaller, and it should only be small enough not to allow passage therethrough of microplastic to be collected. Purification apparatus 1 in the present embodiment thus collects microplastic from the supernatant with the use of filter 210 having the mesh size smaller than the size of microplastic to be collected.

In an example where filter 210 has the small mesh size, a filtration resistance tends to be higher than in an example where the mesh size is large. The filtration resistance refers to a resistance applied to the mixed sample by filter 210 until the mixed sample that flows out of discharge pipe 80 flows to supernatant reservoir 215.

The heavy solution that is introduced in between meshes in filter 210 and in contact with the meshes has surface tension. The heavy solution introduced in between meshes in filter 210 is pulled by surface tension in a direction to suppress drop from filter 210. In other words, surface tension produced in the heavy solution introduced in between meshes can be the filtration resistance. As a result of overflow treatment, the mixed sample having a weight that cannot be born by surface tension further flows in, and consequently the heavy solution passes through filter 210 and starts to flow into supernatant reservoir 215. In other words, the filtration resistance caused by surface tension disappears by drop of the heavy solution introduced in between meshes by application of force in a direction of drop of the heavy solution.

The filtration resistance can be increased also by deposits. The deposits include a residue also referred to as a cake or a filter cake, and includes microplastic itself to be collected. The deposits deposited on filter 210 with progress of filtration clog gaps between meshes in filter 210, which increases the filtration resistance of filter 210. In this case, the mixed sample that newly flows in from discharge pipe 80 passes through an area of filter 210 that is not clogged by the deposits and flows into supernatant reservoir 215.

Thus, when the filtration resistance of filter 210 increases and an amount of the mixed sample that newly flows in from discharge pipe 80 is larger than an amount of the heavy solution that passes through filter 210, the mixed sample retained on filter 210 may increase and the retained mixed sample may flow over the container where filter 210 is held.

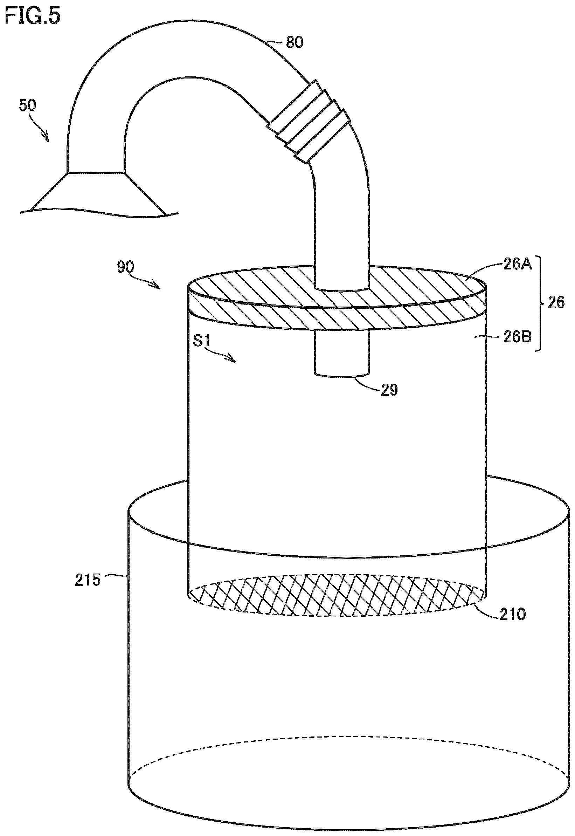

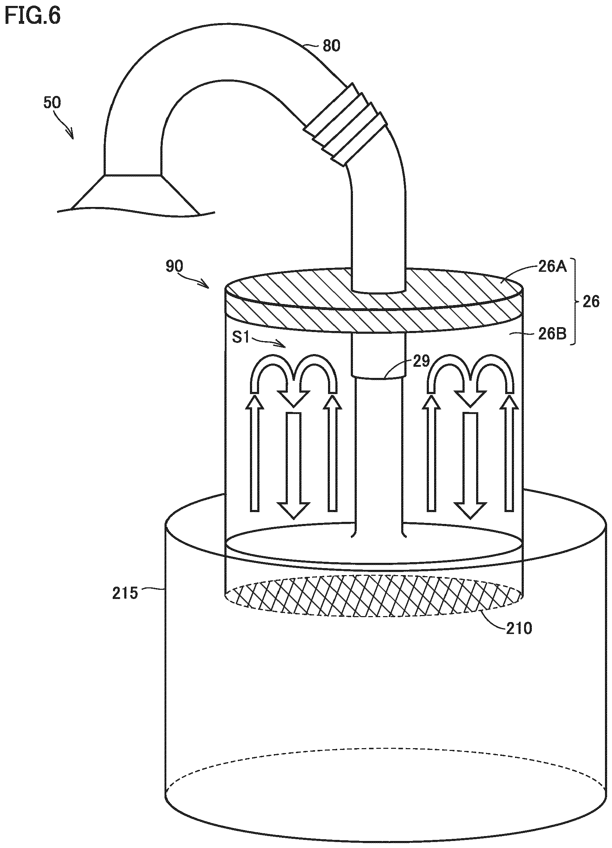

Purification apparatus 1 according to the present embodiment is then constructed to suppress retention of the mixed sample on filter 210. Suppression of retention of the mixed sample on filter 210 in purification apparatus 1 according to the present embodiment will be described below with reference to Figs. 5 and 6. Specifically, purification apparatus 1 in the present embodiment suppresses retention of the mixed sample by being provided with a connection portion 26 that connects filter 210 and discharge pipe 80 to each other.

### [As to Construction of Filter and Discharge Pipe]

Fig. 5 is a diagram showing connection portion 26 that connects filter 210 and discharge pipe 80 to each other according to the present embodiment. As shown in Fig. 5, purification apparatus 1 includes connection portion 26 that connects filter 210 and discharge pipe 80 to each other. Filter unit 90 includes filter 210 and connection portion 26. Connection portion 26 includes a lid portion 26A and a wall portion 26B. When filter 210 is viewed in a plan view, filter 210 is in a circular shape. Wall portion 26B is connected to an end of circular filter 210 to surround filter 210. Wall portion 26B guides the mixed sample to filter 210 such that the heavy solution included in the mixed sample that flows in from discharge pipe 80 reliably passes through filter 210. In other words, wall portion 26B prevents the mixed sample from dropping into supernatant reservoir 215 without passing through filter 210.

Purification apparatus 1 in the present embodiment includes lid portion 26A at an upper portion of wall portion 26B. When lid portion 26A is viewed in the plan view, lid portion 26A is in a circular shape similarly to filter 210. Lid portion 26A is provided with a passage hole in the center of the circular shape of lid portion 26A. The passage hole is provided for passage of discharge pipe 80. An inner diameter of a discharge hole is substantially equal to an outer diameter of discharge pipe 80.

Discharge pipe 80 passes through the passage hole in lid portion 26A and projects from a lower surface of lid portion 26A. In other words, discharge pipe 80 has an end 29 arranged under lid portion 26A. As end 29 of discharge pipe 80 projects from lid portion 26A, adhesion of the mixed sample that flowed through discharge pipe 80 to the lower surface of lid portion 26A or an inner wall of wall portion 26B can be suppressed. Adhesion of the mixed sample containing microplastic to be collected to the lower surface of lid portion 26A or the inner wall of wall portion 26B and resultant failure in trap of the mixed sample by filter 210 can thus be suppressed.

Discharge pipe 80 and the passage hole in lid portion 26A are connected as being in intimate contact with each other. Wall portion 26B and lid portion 26A are also connected as being in intimate contact with each other. Furthermore, wall portion 26B and filter 210 are also connected as being in intimate contact with each other. A space S1 is thus provided in the inside of lid portion 26A, wall portion 26B, and filter 210. Though a degree of intimate contact among discharge pipe 80, lid portion 26A, and wall portion 26B may be as high as liquid-tight contact, airtight contact is preferred.

In other words, wall portion 26B and lid portion 26A are arranged to surround space S1 between filter 210 and discharge pipe 80. If filter 210 is formed from a member that does not allow passage of air therethrough and end 29 is closed, space S1 is hermetically sealed by lid portion 26A, wall portion 26B, and filter 210. In other words, connection portion 26 is attached to filter 210 and discharge pipe 80 to connect them to each other.

Fig. 6 is a diagram showing a state in which the mixed sample flows from discharge pipe 80 into filter 210. As shown in Fig. 6, as a result of overflow treatment, the mixed sample flows out of discharge pipe 80 to filter 210. Fig. 6 shows a state in which the mixed sample on filter 210 is supported by surface tension. In other words, in Fig. 6, the mixed sample is retained on filter 210.

As described above, space S1 is surrounded by connection portion 26 including lid portion 26A and wall portion 26B. Therefore, as the mixed sample flows out of discharge pipe 80, air in space S1 is compressed and this compression generates a pressure in a direction of expansion of air in space S 1. The pressure for passage through filter 210 is thus applied to the mixed sample retained on filter 210.

In other words, compressed air in space S1 applies the pressure in a direction to push the mixed sample retained on filter 210. In other words, the pressure from compressed air in space S1 in addition to load of the mixed sample itself on filter 210 is applied to the heavy solution introduced in between meshes. When surface tension is no longer able to bear the load of the mixed sample itself on filter 210 to which the pressure is applied by air in space S1, the mixed sample on filter 210 starts to flow into supernatant reservoir 215.

Thus, since connection portion 26 that connects filter 210 and discharge pipe 80 to each other surrounds space S1, purification apparatus 1 in the present embodiment can promote passage of the heavy solution retained on filter 210 with air surrounded by connection portion 26 even when the filter is temporarily clogged due to the filtration resistance. In other words, purification apparatus 1 in the present embodiment can suppress retention of the mixed sample on filter 210.

Even when the filtration resistance is produced by deposits rather than surface tension, in purification apparatus 1, air in space S1 pushes the heavy solution contained in the mixed sample toward meshes in filter 210 in which no deposits are deposited. In other words, purification apparatus 1 in the present embodiment smoothens filtration treatment and suppresses retention of the mixed sample by pushing the heavy solution contained in the mixed sample through meshes in filter 210 in which no deposits are deposited.

In purification apparatus 1 in the present embodiment, simply by providing connection portion 26, passage through filter 210, of the mixed sample retained on filter 210 can be promoted and retention can be suppressed. Therefore, a pump for drawing the mixed sample retained on filter 210 toward supernatant reservoir 215 does not have to be prepared, and increase in cost for manufacturing purification apparatus 1 can be suppressed.

Connection portion 26 in the present embodiment is formed of resin. The resin is, for example, silicone resin. In other words, a base material for connection portion 26 is a material different from microplastic to be collected. Thus, a part of connection portion 26 that comes off due to break of connection portion 26 can be prevented from being erroneously collected as the target substance to be collected.

As described above, container 50 in the present embodiment is formed of glass. As lid portion 26A is composed of silicone resin, intimate contact between lid portion 26A and discharge pipe 80 made of glass can be improved. Leakage of air in space S1 through between lid portion 26A and discharge pipe 80 of container 50 can thus be suppressed.

Furthermore, connection portion 26 in purification apparatus 1 in the present embodiment is attachable to and removable from discharge pipe 80 or filter 210. Microplastic trapped on filter 210 can thus readily be collected after the end of filtration treatment. By removal of connection portion 26 from discharge pipe 80, discharge pipe 80 can readily be cleaned or repaired.

### [First Modification]

The base material for connection portion 26 shown in Figs. 5 and 6 is silicone resin and the base material for discharge pipe 80 is glass. In other words, connection portion 26 and discharge pipe 80 are formed as separate components. Connection portion 26 and discharge pipe 80, however, may be provided as the same integrated component.

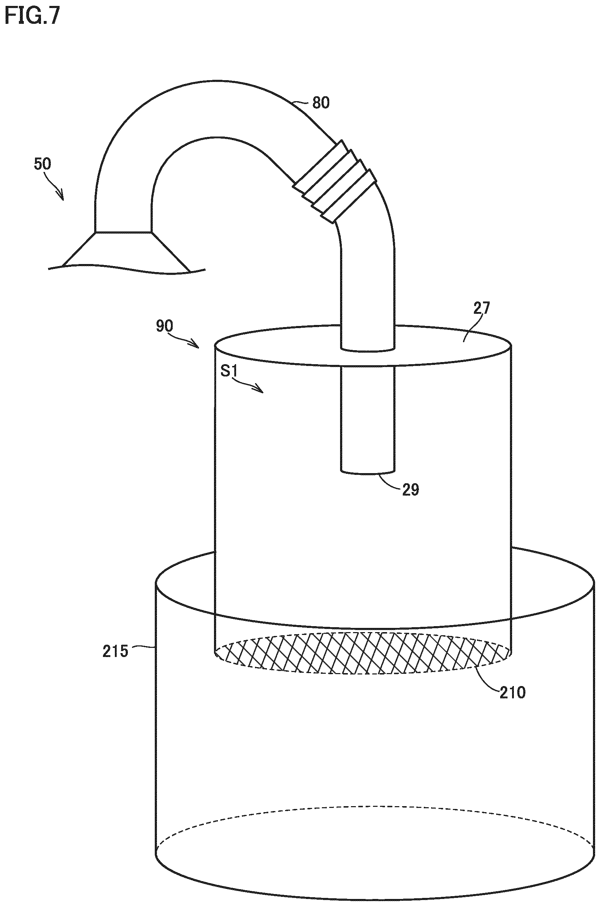

Fig. 7 is a diagram showing a connection portion 26 that connects filter 210 and discharge pipe 80 to each other in a first modification. Connection portion 27 and discharge pipe 80 in the first modification are integrally molded. In other words, connection portion 27 is formed as a part of container 50. Connection portion 27 in the first modification is formed of a transparent material. The user can thus externally check microplastic trapped by filter 210. In other words, the user can take filter 210 from a lower surface of connection portion 27 while the user checks filter 210. Thus, in purification apparatus 1 in the first modification, connection portion 27 is provided as a part of container 50 so that increase in number of components of purification apparatus 1 can be suppressed.

In purification apparatus 1 in the first modification as well, connection portion 27 that connects filter 210 and discharge pipe 80 to each other surrounds space S1. Therefore, even when the filter is temporarily clogged due to the filtration resistance, air surrounded by connection portion 26 can promote passage of the mixed sample retained on filter 210. In other words, purification apparatus 1 in the first modification can suppress retention of the mixed sample on filter 210.

### [Second Modification]

Connection portion 26 shown in Figs. 5 and 6 includes lid portion 26A and wall portion 26B. Connection portion 26, however, may be in a shape different from that in the first embodiment.

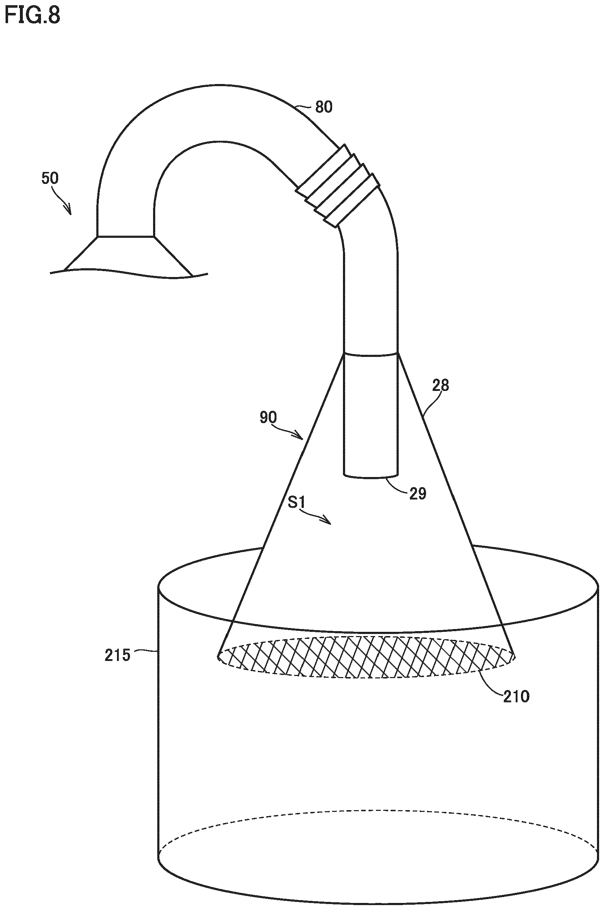

Fig. 8 is a diagram showing a connection portion 28 that connects filter 210 and discharge pipe 80 to each other in a second modification. Connection portion 28 in the second modification is in a conical shape. Connection portion 28 surrounds space S1 on an inner side of the conical shape. The shape of connection portion 28 is not limited to connection portion 28 but a bell shape, a parallelepiped, or the like may be applicable. Connection portion 28 in the second modification is also formed of a transparent material. The user can thus externally check microplastic trapped by filter 210. In other words, the user can take filter 210 from a lower surface of connection portion 28 while the user checks filter 210.

Thus, in purification apparatus 1 in the second modification as well, connection portion 28 that connects filter 210 and discharge pipe 80 to each other surrounds space S1. Therefore, even when the filter is temporarily clogged due to the filtration resistance, air surrounded by connection portion 28 can promote passage of the mixed sample retained on filter 210. In other words, purification apparatus 1 in the second modification can suppress retention of the mixed sample on filter 210.

### [Aspects]

Illustrative embodiments described above are understood by a person skilled in the art as specific examples of aspects below.

(Clause 1) A purification apparatus according to one aspect is a purification apparatus that purifies a specific sample from a mixed sample. The purification apparatus includes a container to separate the mixed sample with a heavy solution based on a specific gravity difference, a filter unit that collects the specific sample in the mixed sample by introduction of a supernatant discharged from the container, the specific sample being lighter in specific gravity than the heavy solution, and a discharge path that guides the supernatant discharged from the container to the filter unit. The filter unit includes a filter and a connection portion, the connection portion being attached to the filter and the discharge path and connecting the filter and the discharge path to each other.

According to the purification apparatus according to Clause 1, the connection portion that connects the filter and the discharge path to each other surrounds a space. Therefore, even when the filter is clogged due to a filtration resistance, air surrounded by the connection portion promotes passage of the mixed sample retained on the filter. In other words, purification apparatus 1 can suppress retention of the mixed sample on the filter.

(Clause 2) The filter unit is in intimate contact with the discharge path.

According to the purification apparatus according to Clause 2, air surrounded by the connection portion can hermetically be sealed, which can promote passage of the mixed sample retained on the filter.

(Clause 3) The connection portion includes a lid portion and a wall portion, and the discharge path has an end projecting from the lid portion.

According to the purification apparatus according to Clause 3, adhesion of the mixed sample containing microplastic to be collected to a lower surface of the lid portion or an inner wall of the wall portion and resultant failure in trap of the mixed sample by the filter can be suppressed.

(Clause 4) The connection portion is composed of a material different from a material for the specific sample.

According to the purification apparatus according to Clause 4, a part of the connection portion that comes off due to break of the connection portion can be prevented from being erroneously collected as the target substance to be collected.

(Clause 5) The material for the connection portion is resin.

According to the purification apparatus according to Clause 5, leakage of air in the space surrounded by the connection portion through between the lid portion and the discharge pipe of the container can be suppressed.

(Clause 6) The connection portion is removable from the discharge path or the filter.

According to the purification apparatus according to Clause 6, microplastic trapped on the filter can readily be collected after the end of filtration treatment. By removal of the connection portion from the discharge pipe, the discharge pipe can readily be cleaned or repaired.

(Clause 7) The connection portion and the discharge path are integrally molded.

According to the purification apparatus according to Clause 7, the connection portion is provided as a part of the container so that increase in number of components of the purification apparatus can be suppressed.

(Clause 8) The specific sample is microplastic.

The purification apparatus according to Clause 8 can collect microplastic.

It should be understood that the embodiment disclosed herein is illustrative and non-restrictive in every respect. The scope of the present invention is defined by the terms of the claims rather than the description above and is intended to include any modifications within the scope and meaning equivalent to the terms of the claims.

### REFERENCE SIGNS LIST

11 to 23 pipe; 26 to 28 connection portion; 26A lid portion; 26B wall portion; 29 end; 31 to 33 pump; 41 to 43 electromagnetic valve; 50 container; 51 first member; 52 second member; 55 discharge port; 61 to 64 port; 71 stirrer; 72 stirring bar; 80 discharge pipe; 100 purification instrument; 110 decomposition solution reservoir; 120 heavy solution reservoir; 215 supernatant reservoir; 130 rinse solution reservoir; 140, 150 waste solution reservoir; 210 filter; 300 casing; 310, 320, 330 opening; 500 control device; 501 computing device; 502 memory; 503 communication device; 504 display device; 505 input device; 506 data reading device; 507 storage medium; 510 storage; 511 control program; 512 control data; S1 space.

## Claims

1. A purification apparatus that purifies a specific sample from a mixed sample, the purification apparatus comprising:
a container to separate the mixed sample with a heavy solution based on a specific gravity difference;
a filter unit that collects the specific sample in the mixed sample by introduction of a supernatant discharged from the container, the specific sample being lighter in specific gravity than the heavy solution; and
a discharge path that guides the supernatant discharged from the container to the filter unit, wherein
the filter unit includes a filter and a connection portion, the connection portion being attached to the filter and the discharge path and connecting the filter and the discharge path to each other.

2. The purification apparatus according to claim 1, wherein
the filter unit is in intimate contact with the discharge path.

3. The purification apparatus according to claim 1, wherein
the connection portion includes a lid portion and a wall portion, and
the discharge path has an end projecting from the lid portion.

4. The purification apparatus according to claim 1, wherein
the connection portion is composed of a material different from a material for the specific sample.

5. The purification apparatus according to claim 4, wherein
the material for the connection portion is resin.

6. The purification apparatus according to claim 1, wherein
the connection portion is removable from the discharge path or the filter.

7. The purification apparatus according to claim 1, wherein
the connection portion and the discharge path are integrally molded.

8. The purification apparatus according to claim 1, wherein
the specific sample is microplastic.
